# EUROPEAN PATENT SPECIFICATION

(11) **EP 3 723 913 B1**
(45) Date of publication and mention of the grant of the patent: **15.02.2023**
(21) Application number: 18812185.9
(22) Date of filing: 10.12.2018
(51) Int. Cl.: B05D 7/06, B05D 3/06, B05D 5/06, B05D 7/00, B32B 21/14, E04F 15/10, B32B 3/06, B32B 3/14, B32B 21/02, B32B 21/06, B32B 21/08, B32B 21/13, B32B 29/08, B44C 5/04

(54) **METHOD FOR THE MANUFACTURE OF A FLOOR TILE WITH A WOOD BASED SUBSTRATE**
VERFAHREN ZUR HERSTELLUNG EINER BODENFLIESE MIT EINEM HOLZBASIERTEN SUBSTRAT
PROCÉDÉ POUR LA FABRICATION D'UN CARREAU DE PLANCHER COMPORTANT UN SUBSTRAT À BASE DE BOIS

(30) Priority: 11.12.2017 EP 17206486
(43) Date of publication of application: 21.10.2020
(73) Proprietor: Tarkett GDL S.A., 9779 Lentzweiler (LU)
(72) Inventor: GRKOVIC, Mladen, 11030 Belgrade (RS); BUGARCIC, Branko, 21400 Backa Palanka (RS); BRANKOV STOJANOVIC, Irena, 21400 Backa Palanka (RS); CVIJETIC, Predrag, 21000 Novi Sad (RS)
(74) Representative: Lavoix
(86) International application number: PCT/EP2018/084131
(87) International publication number: WO 2019/115442

(56) References cited:
- CN-A- 101 691 806
- JP-A- 2001 322 223
- KR-A- 20030 083 066
- KR-A- 20090 066 585

## Description

The present invention deals with a method for manufacturing a floor tile with a wood based substrate, notably panels and boards, in particular based on wood fibers such as MDF (Medium Density Fiberboard) or HDF (High Density Fiberboard) substrates on which a décor is formed by digital printing.

The invention also deals with a floor tile with a wood based substrate, obtainable using such a method.

Digital printing refers to methods of printing from a digital based image directly to the substrate. It usually refers to professional printing where small run jobs from desktop publishing and other digital sources are printed using large format and/or high volume laser or inkjet printers. Digital printing has a higher cost per printed object than traditional offset printing methods but this price is usually offset by the cost saving achieved by avoiding all the technical steps in between needed to make printing plates.

In order to obtain high quality, the décor may be printed on a separate support of paper or fleece which is applied onto the substrate. Indeed, while a basic layer may be applied in order to ensure sufficient adherence of the applied inks, such basic layers may affect the printing quality. Indeed, a porous layer may absorb the ink leading to insufficient covering while a non-porous basic layer may lead to their coalescence and affect color quality. The use of a separate support for printing however makes the process more costly and complex.

KR 2003 0083066 A discloses a floor tile having a wooden base made out of plywood. The substrate is coated with a first and a second layer comprising a polyurethane acrylate resin and an acrylate resin and filler. Subsequently, a base colour layer is applied as primer, a printing layer is applied as décor and three further layers are applied as topcoat layers. Each layer is UV cured before applying a new layer.

Usually the substrate comprises a core layer and an upper layer which is made of wood or derived from wood. When the upper layer thickness is relatively small and lies for example between 0.5 and 2 mm, it is usually referred to as "veneer", and when the thickness is larger, for example between 2.5 and 4 mm it is usually referred to as 'wooden lamellas'. The veneer is selected for having a nice aspect, devoid of any visible imperfections.

In a known solution, a single piece of veneer covers the core layer of the tile. In this case, the dimensions of the veneer are those of the tile, typically 2m x 18-22cm x 2-3mm.

As a consequence, the veneer, and consequently the tile, are rather expensive. In order to obtain tiles at a more competitive cost, several pieces of veneer are used for covering the core layer. In this solution, each single piece has a smaller surface than the tile. For a same quality, these smaller pieces cost less than the large ones, so that production costs are decreased. However, the visual aspect of the tile is not as good, for the junctions between the pieces of veneer tend remain visible, which gives the user an impression of lower quality.

An aim of the invention is to provide a floor tile at competitive cost, providing the user with an impression of better quality.

To this end, the invention proposes a method for the manufacture of a floor tile according to claim 1.

In other embodiments, the method may comprise one or several of the features corresponding to claim 2 to 8, taken in isolation or any technically feasible combination.

The invention also relates to a floor tile according to claim 9.

In other embodiments, the floor tile comprises one or several of the features according to claims 10 to 13, taken in isolation or any technically feasible combination.

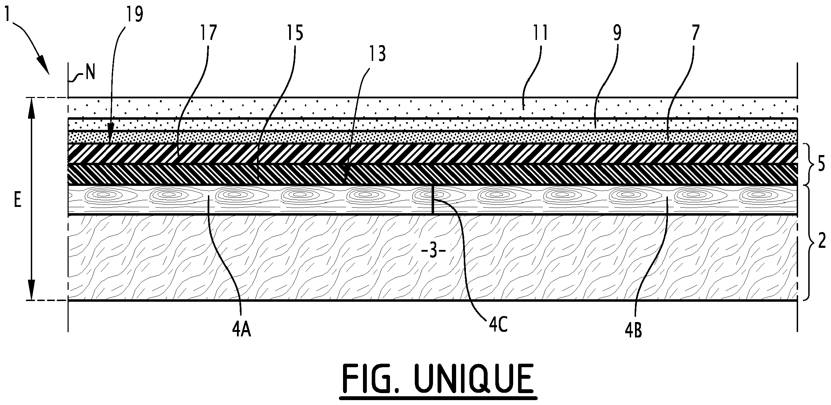

The invention and its advantages will be better understood upon reading the following description, given solely by way of example and with reference to the appended drawing, in which the Figure is a schematic cross sectional view of a floor tile according to the invention.

With reference to the Figure, a floor tile 1 is described.

The floor tile 1 has a thickness E along a direction N perpendicular to the floor tile. The floor tile 1, in view along the direction N, may have any shape allowing paving a floor (not represented): rectangular, square, triangular, hexagonal...etc. The floor tile 1 is intended to be applied on the floor adjacent to other tiles (not represented) having the same shape or composition, or different ones. Advantageously the floor tile 1 includes locking tabs (knows in themselves and not represented) enabling to connect it to adjacent tiles.

Successively in the direction N, the floor tile 1 comprises a substrate 2, a coating 5, a primer layer 7 located on the coated substrate, a décor 9 digitally printed on the primer layer, and a top coat 11 located on the decor.

The substrate 2 comprises a core layer 3, and an upper layer 4 forming a veneer applied on the core layer. The thickness of the substrate 2 for example ranges from 1.8 to 2.2 mm. The substrate 2 has an upper surface 13 which has advantageously been sanded, in order to promote the adherence between the substrate and the coating 5.

The core layer 3 may be chosen from the group consisting of panels and boards. wood based boards, in particular wood-fiber boards are preferably used.

In one embodiment, the core layer 3 is chosen from the group consisting of HDF, MDF, cardboards, WPC (Wood Plastic Composite) and soft wood ribs. In particular, the substrate is HDF.

The upper layer 4 is formed by several pieces of veneer adjacent perpendicularly to the direction N, of which two pieces 4A, 4B are represented on the Figure.

The upper layer 4 is made of wood, or derived from wood. The veneer is selected for having a nice aspect, normally devoid of any visible imperfections.

The two pieces 4A, 4B define a junction 4C between themselves.

The coating 5 is located on the upper surface 13. The coating 5 comprises a first layer of coating 15 located on the upper surface 13, and a second layer of coating 17 located on the first one. The coating 5 has an upper surface 19 which has advantageously been sanded. The thickness of the coating 5 is between 30 and 40 microns when finalized.

The first layer of coating 15 contains a hardener and has been cured by UV rays.

In a particular embodiment, the first layer of coating 15 only contains the hardener.

The hardener is for example an additive, preferably an isocyanate which advantageously reacts with the moisture of wood fibers of the core layer 3.

The hardener promotes the bound between wood fibers and the coating 15. The hardener may contain a mix of hexane,1,6-diisocyanato-homopolymer and/or hexamethylene-di-isocyanate.

According to a particular embodiment, the hardener is made of said mix.

The second layer of coating 17 is for example a filler which has been cured using UV rays. The filler is for example a thixotropic UV curable coating based on acrylate functionalized resin, such as urethane, polyester, or epoxy. The filler is used to fill the pores of the core layer 3 and/or the first layer of coating 15 before applying the primer 7.

The primer 7 is advantageously white.

The décor 9 comprises one or several UV inks. The used inks may comprise cyan, magenta, yellow and black inks, but advantageously no white ink. The quantity of inks used is in total between 30 and 50 g/m² and more preferably between 35 and 40 g/m². The thickness of the primer 7 and the décor 9, taken altogether, is between 25 and 30 microns.

A method for producing floor tiles such as the floor tile 1 will now be described.

First the wood based substrate 2 is obtained. Ways to obtain such a substrate are known to the skilled person and will not be described.

Then the upper surface 13 of the substrate 2 is sanded.

The coating 5 is then applied on the upper surface 13.

To that end, the first layer of coating 15 is applied on the sanded upper surface 13, and cured using UV rays (not represented). Curing is performed in a manner known in itself. Preferably, the applied amount of dry film is between 15 and 40 g/m².

The second layer of coating 17 is applied on the first layer of coating 15, and the filler is cured using UV rays. Preferably, the applied amount of dry film is between 10 and 50 g/m².

Thanks to the coating, the junction 4C or the imperfections of the veneer will not be perceived once the tile 1 is finished.

The upper surface 19 of the substrate 5 is then advantageously sanded, and the primer layer 7 is applied on the upper surface. Preferably, the applied amount of dry film is between 10 and 60 g/m². The primer layer 7 facilitates future application of the inks.

The décor 9 is then printed on the primer layer 7. This is advantageously carried out using a Drop-on-Demand inkjet system, for example using UV ink. Advantageously, only cyan, magenta, yellow or black inks are used, but no white ink.

The top coat 11 is finally applied on the décor 9. Preferably, the applied amount of top coat, once dry, is between 5 and 12 g/m². The thickness of the top coat 11 is between 40 and 50 microns.

In particular embodiments, the obtained panel is cut into smaller pieces forming the tiles.

Thanks to the above features, imperfections due to the junction between the pieces 4A, 4B of veneer, or due to a lower quality of the veneer are masked by the coating 5. Hence the floor tile 1 provides the user with an impression of better quality at more competitive cost.

The invention provides a parquet with "laminate" design on top. The obtained parquet looks very natural. It also allows a variety of design effects, such as like with a laminate product.

The obtained floor tiles are cheaper compared to corresponding standard wood products, and have an equal durability, thanks to the top coat.

Environmental aspect of the obtained floor tiles is also really positive, since about twice less veneer raw material is used in order to produce high quality tiles with several pieces of veneer in each tile.

### Example(s)

As an example, the first layer of coating 15 may by a mixture of the UV SEALER 583 and the HARDENER 896 from AkzoNobel.

The second layer of coating 17 may be the UV FILLER 576 from AkzoNobel.

The primer 7 may be the UK1373-9001 from Sherwin-Williams.

The top coat 11 may be a lacquer from AkzoNobel, such as UV TOP COAT NATURA, UV TOP COAT PROTECO or UV TOP HIGH GLOSS.

### Protocole:

### Obtain the substrate,

Apply the first layer of coating 15 with hardener and then cure the first layer of coating,
Apply the second layer of coating 17 with the filler and then cure the second layer of coating,

### Sand the upper surface,

Change of line for performing digital printing on the white primer 7 and then curing of the UV inks,
Go back to the first line and print the décor 9 using UV inks and then cure the UV inks,

Apply the top coat 11 and then cure it.

## Claims

1. A method for the manufacture of a floor tile (1), comprising at least the following successive steps:
- obtaining a substrate (2) having at least a wood based upper layer (4);
- optionally sanding an upper surface (13) defined by the upper layer (4);
- coating the substrate (2), wherein coating the substrate (2) comprises applying at least a first layer of coating (15) on the upper surface (13), curing the first layer of coating (15) using UV rays, applying a second layer of coating (17) on the first layer of coating (15), and curing the second layer of coating (17) using UV rays, wherein the first layer of coating (15) contains a hardener and the second layer of coating (17) contains a filler;
- optionally sanding an upper surface (19) of the coated substrate;
- applying a primer layer (7) on the coated substrate;
- digitally printing a décor (9) on the primer layer (7); and
- applying a top coat (11) on the décor (9),
**characterised in that** obtaining the substrate (2) comprises obtaining a core layer (3), and paving the core layer (3) with several pieces of veneer (4A, 4B) in order to obtain the upper layer (4), the pieces of veneer (4A, 4B) being adjacent perpendicularly to a normal direction (N) perpendicular to the tile (1).

2. The method according to claim 1, wherein the core layer (3) is chosen from the group consisting of panels and boards, preferably from the group consisting of HDF, MDF, cardboards and WPC.

3. The method according to any one of claims 1 or 2, wherein the hardener comprises an isocyanate.

4. The method according to claim 3, wherein the hardener comprises a mix of hexane,1,6-diisocyanato-homopolymer and hexamethylene-di-isocyanate.

5. The method according to any of claims 1 to 4, wherein the filler comprises at least 50wt% of an acrylate functionalized resin.

6. The method according to any one of claims 1 to 5, wherein the primer layer (7) is white.

7. The method according to any one of claims 1 to 6, wherein the step of digitally printing is carried out using a Drop-on-Demand inkjet system.

8. The method according to any one of claims 1 to 7, wherein the step of digitally printing is carried out using UV ink or water-based ink.

9. A floor tile (1) comprising:
- a substrate (2) having at least a wood based upper layer (4) defining an upper surface, the upper surface being optionally sanded;
- a coating (5) comprising at least a first layer of coating (15) located on the upper surface (13), and a second layer of coating (17) located on the first layer of coating (15), the first layer of coating (15) containing a hardener and having been cured by UV rays, the second layer of coating (17) containing a filler and having been cured using UV rays, the coating defining an upper surface (19), and the upper surface (19) being optionally sanded,
- a primer layer located on the upper surface (19) of the coating (5);
- a décor (9) digitally printed on the primer layer (7); and
- a top coat (11) located on the décor (9),
**characterised in that** the substrate (2) comprises a core layer (3), and several pieces of veneer (4A, 4B) paving the core layer (3) and forming the upper layer (4), the pieces of veneer (4A, 4B) being adjacent perpendicularly to a normal direction (N) perpendicular to the tile (1).

10. The floor tile (1) according to claim 9, wherein the hardener comprises an isocyanate.

11. The floor tile (1) according to claim 9 or 10, wherein the filler comprises an acrylate functionalized resin.

12. The floor tile (1) according to any one of claims 9 to 11, wherein the primer layer (7) is white.

13. The floor tile (1) according to any one of claims 9 to 12, wherein the thickness of the coating (5) is between 30 and 40 microns.

## Patentansprüche

1. Verfahren zur Herstellung einer Bodenfliese (1), mindestens umfassend die folgenden aufeinanderfolgenden Schritte:
- Erlangen eines Substrats (2), das mindestens eine holzbasierte obere Schicht (4) aufweist;
- optional Schleifen einer oberen Oberfläche (13), die durch die obere Schicht (4) definiert ist;
- Beschichten des Substrats (2), wobei ein Beschichten des Substrats (2) ein Aufbringen mindestens einer ersten Beschichtungsschicht (15) auf die obere Oberfläche (13), ein Aushärten der ersten Beschichtungsschicht (15) unter Verwendung von UV-Strahlen, ein Aufbringen einer zweiten Beschichtungsschicht (17) auf die erste Beschichtungsschicht (15) und ein Aushärten der zweiten Beschichtungsschicht (17) unter Verwendung von UV-Strahlen umfasst, wobei die erste Beschichtungsschicht (15) einen Härter und die zweite Beschichtungsschicht (17) einen Füllstoff enthält;
- optional Schleifen einer oberen Oberfläche (19) des beschichteten Substrats;
- Aufbringen einer Grundierungsschicht (7) auf das beschichtete Substrat;
- digital Drucken eines Dekors (9) auf die Grundierungsschicht (7); und
- Auftragen einer Deckschicht (11) auf das Dekor (9),
**dadurch gekennzeichnet, dass** ein Erlangen des Substrats (2) ein Erlangen einer Kernschicht (3) und ein Verkleiden der Kernschicht (3) mit mehreren Furnierstücken (4A, 4B) umfasst, um die obere Schicht (4) zu erlangen, wobei die Furnierstücke (4A, 4B) senkrecht zu einer senkrechten Richtung (N) senkrecht zu der Fliese (1) aneinandergrenzen.

2. Verfahren nach Anspruch 1, wobei die Kernschicht (3) ausgewählt ist aus der Gruppe, bestehend aus Paneelen und Platten, vorzugsweise aus der Gruppe, bestehend aus HDF, MDF, Pappe und WPC.

3. Verfahren nach einem der Ansprüche 1 bis 2, wobei der Härter ein Isocyanat umfasst.

4. Verfahren nach Anspruch 3, wobei der Härter ein Gemisch aus Hexan, 1,6-Diisocyanato-Homopolymer und Hexamethylen-Diisocyanat umfasst.

5. Verfahren nach einem der Ansprüche 1 bis 4, wobei der Füllstoff mindestens 50 Gewichtsprozent eines acrylatfunktionalisierten Harzes umfasst.

6. Verfahren nach einem der Ansprüche 1 bis 5, wobei die Grundierungsschicht (7) weiß ist.

7. Verfahren nach einem der Ansprüche 1 bis 6, wobei der Schritt eines digitalen Druckens unter Verwendung eines Tintenstrahlsystems Drop-on-Demand durchgeführt wird.

8. Verfahren nach einem der Ansprüche 1 bis 7, wobei der Schritt eines digitalen Druckens unter Verwendung von UV-Tinte oder wasserbasierter Tinte durchgeführt wird.

9. Bodenfliese (1), umfassend:
- ein Substrat (2), das mindestens eine holzbasierte obere Schicht (4) aufweist, die eine obere Oberfläche definiert, wobei die obere Oberfläche optional geschliffen ist;
- eine Beschichtung (5), umfassend mindestens eine erste Beschichtungsschicht (15), die sich auf der oberen Oberfläche (13) befindet, und eine zweite Beschichtungsschicht (17), die sich auf der ersten Beschichtungsschicht (15) befindet, wobei die erste Beschichtungsschicht (15) einen Härter enthält und durch UV-Strahlen gehärtet wurde, wobei die zweite Beschichtungsschicht (17) einen Füllstoff enthält und durch UV-Strahlen gehärtet wurde, wobei die Beschichtung eine obere Oberfläche (19) definiert, und wobei die obere Fläche (19) optional geschliffen wird,
- eine Grundierungsschicht, die sich auf der oberen Oberfläche (19) der Beschichtung (5) befindet;
- ein Dekor (9), das digital auf die Grundierungsschicht (7) gedruckt wird; und
- eine Deckschicht (11), die sich auf dem Dekor (9) befindet,
**dadurch gekennzeichnet, dass** das Substrat (2) eine Kernschicht (3) und mehrere Furnierstücke (4A, 4B), die die Kernschicht (3) verkleiden und die obere Schicht (4) bilden, umfasst, wobei die Furnierstücke (4A, 4B) senkrecht zu einer senkrechten Richtung (N) senkrecht zu der Fliese (1) aneinandergrenzen.

10. Bodenfliese (1) nach Anspruch 9, wobei der Härter ein Isocyanat umfasst.

11. Bodenfliese (1) nach Anspruch 9 oder 10, wobei der Füllstoff ein acrylatfunktionalisiertes Harz umfasst.

12. Bodenfliese (1) nach einem der Ansprüche 9 bis 11, wobei die Grundierungsschicht (7) weiß ist.

13. Bodenfliese (1) nach einem der Ansprüche 9 bis 12, wobei die Dicke der Beschichtung (5) zwischen 30 und 40 Mikrometer ist.

## Revendications

1. - Procédé de fabrication d'un carreau de sol (1), comprenant au moins les étapes successives suivantes :
- obtention d'un substrat (2) ayant au moins une couche supérieure à base de bois (4) ;
- facultativement le ponçage d'une surface supérieure (13) définie par la couche supérieure (4) ;
- application d'un revêtement sur le substrat (2), dans lequel l'application du revêtement sur le substrat (2) comprend l'application d'au moins une première couche de revêtement (15) sur la surface supérieure (13), le durcissement de la première couche de revêtement (15) à l'aide de rayons UV, l'application d'une seconde couche de revêtement (17) sur la première couche de revêtement (15), et le durcissement de la seconde couche de revêtement (17) à l'aide de rayons UV, dans lequel la première couche de revêtement (15) contient un durcisseur et la seconde couche de revêtement (17) contient une charge ;
- facultativement le ponçage d'une surface supérieure (19) du substrat revêtu ;
- application d'une couche primaire (7) sur le substrat revêtu ;
- impression numérique d'un décor (9) sur la couche primaire (7) ; et
- application d'une couche de finition (11) sur le décor (9),
**caractérisé en ce que** l'obtention du substrat (2) comprend l'obtention d'une couche centrale (3), et le revêtement de la couche centrale (3) avec plusieurs éléments de placage (4A, 4B) afin d'obtenir la couche supérieure (4), les éléments de placage (4A, 4B) étant adjacents perpendiculairement à une direction normale (N) perpendiculaire au carreau (1).

2. - Procédé selon la revendication 1, dans lequel la couche centrale (3) est choisie dans le groupe constitué de panneaux et de planches, de préférence dans le groupe constitué par le HDF, le MDF, les cartons et le WPC.

3. - Procédé selon l'une quelconque des revendications 1 et 2, dans lequel le durcisseur comprend un isocyanate.

4. - Procédé selon la revendication 3, dans lequel le durcisseur comprend un mélange d'hexane, de 1,6-diisocyanato-homopolymère et d'hexaméthylène-di-isocyanate.

5. - Procédé selon l'une quelconque des revendications 1 à 4, dans lequel la charge comprend au moins 50 % en poids d'une résine d'acrylate fonctionnalisée.

6. - Procédé selon l'une quelconque des revendications 1 à 5, dans lequel la couche primaire (7) est blanche.

7. - Procédé selon l'une quelconque des revendications 1 à 6, dans lequel l'étape d'impression numérique est réalisée à l'aide d'un système de jet d'encre goutte à la demande.

8. - Procédé selon l'une quelconque des revendications 1 à 7, dans lequel l'étape d'impression numérique est réalisée à l'aide d'une encre UV ou d'une encre à base d'eau.

9. - Carreau de sol (1) comprenant :
- un substrat (2) ayant au moins une couche supérieure à base de bois (4) définissant une surface supérieure, la surface supérieure étant facultativement poncée ;
- un revêtement (5) comprenant au moins une première couche de revêtement (15) située sur la surface supérieure (13), et une seconde couche de revêtement (17) située sur la première couche de revêtement (15), la première couche de revêtement (15) contenant un durcisseur et ayant été durcie par des rayons UV, la seconde couche de revêtement (17) contenant une charge et ayant été durcie en utilisant des rayons UV, le revêtement définissant une surface supérieure (19), et la surface supérieure (19) étant facultativement poncée,
- une couche primaire située sur la surface supérieure (19) du revêtement (5) ;
- un décor (9) imprimé numériquement sur la couche primaire (7) ; et
- une couche de finition (11) située sur le décor (9),
**caractérisé en ce que** le substrat (2) comprend une couche centrale (3), et plusieurs éléments de placage (4A, 4B) revêtant la couche centrale (3) et formant la couche supérieure (4), les éléments de placage (4A, 4B) étant adjacents perpendiculairement à une direction normale (N) perpendiculaire au carreau (1).

10. - Carreau de sol (1) selon la revendication 9, dans lequel le durcisseur comprend un isocyanate.

11. - Carreau de sol (1) selon la revendication 9 ou 10, dans laquelle la charge comprend une résine d'acrylate fonctionnalisée.

12. - Carreau de sol (1) selon l'une quelconque des revendications 9 à 11, dans lequel la couche primaire (7) est blanche.

13. - Carreau de sol (1) selon l'une quelconque des revendications 9 à 12, dans lequel l'épaisseur du revêtement (5) se situe entre 30 et 40 micromètres.
